# EUROPÄISCHE PATENTSCHRIFT

(11) **EP 1 195 580 B1**
(45) Veröffentlichungstag und Bekanntmachung des Hinweises auf die Patenterteilung: **16.04.2003**
(21) Anmeldenummer: 01116508.1
(22) Anmeldetag: 07.07.2001
(51) Int. Cl.: G01D 5/347, G01L 5/16

(54) **Einrichtung zum Erfassen von Relativbewegungen eines Objekts**
Device to monitor relative movements of an object
Dispositif pour détecter les mouvements relatifs d'un object

(30) Priorität: 14.07.2000 DE 10034569
(43) Veröffentlichungstag der Anmeldung: 10.04.2002
(73) Patentinhaber: Deutsches Zentrum für Luft- und Raumfahrt e.V., 53175 Bonn (DE)
(72) Erfinder: Gombert, Bernd, 82284 Grafrath (DE); Dietrich, Johannes, 82205 Gilching (DE); Senft, Volker, 82229 Seefeld (DE)
(74) Vertreter: von Kirschbaum, Albrecht, Dipl.-Ing.

(56) Entgegenhaltungen:
- DE-A- 19 640 717
- US-A- 3 535 923
- US-A- 3 592 054
- US-A- 4 763 531
- US-A- 4 785 180
- PATENT ABSTRACTS OF JAPAN vol. 010, no. 026 (P-425), 31. Januar 1986 (1986-01-31) & JP 60 177233 A (NIPPON DENSHIN DENWA KOSHA), 11. September 1985 (1985-09-11)

## Beschreibung

Die Erfindung betrifft eine Einrichtung zum Erfassen von Relativbewegungen eines Objekts gemäß dem Oberbegriff des Patentanspruchs 1. Ferner betrifft die Erfindung Verwendungsmöglichkeiten der Einrichtung.

Aus, DE 17 73 870 A1 ist ein lastempfindlicher Meßwertumwandler mit einem zwischen zwei starren, längsaxial angeordneten Flanschen angebrachten verformbaren Zwischenstück bekannt, das zylindrisch oder hohlzylindrisch geformt ist und in seinem Inneren ein oder mehrere lastempfindliche Elemente, z.B. elektrische Dehnungsmeßstreifen, aufweist, die eine Veränderung des elektrischen Widerstandes in Abhängigkeit von der durch die mechanische Spannung verursachten Verformung des Zwischenstückes aufweisen.

Bei einer Realisierungsform sind im vollzylindrischen Zwischenstück vier Dehnungsmeßstreifen in zwei parallelen Paaren enthalten, wobei die Streifen des einen Paares parallel zur Richtung der ausgeübten Last, d.h. axial, und die Streifen des anderen Paares senkrecht zu dieser Richtung angeordnet sind. Die Dehnungsmeßstreifen jedes Paares sind in die jeweils diametral gegenüberliegenden Zweige einer elektrischen Brückenschaltung eines Meßgeräts eingeschaltet, das eine Anzeige des Brückengleichstromes und damit der ausgeübten Last liefern kann.

Bei einer weiteren Realisierungsform sind in einem hohlzylindrischen Zwischenstück nur ein oder zwei elektrische Dehnungsmeßstreifen parallel zur ausgeübten Last, d.h. axial, eingelassen. In jedem Fall sind die lastempfindlichen Elemente, d.h. beispielsweise die Dehnungsmeßstreifen im Zwischenstück selbst enthalten, also diesem einverleibt, damit die durch die mechanische Spannung verursachte Verformung in dem Zwischenstück überhaupt aufgenommen werden kann.

Um zu erreichen, daß die elektrischen Ausgangsgrößen der Dehnungsmeßstreifen von der jeweiligen räumlichen Lage der Streifen im Zwischenstück weitgehend unabhängig sind und sich die ausgeübte Last möglichst gleichmäßig über den Querschnitt des verformbaren Zwischenstücks verteilt, ist zusätzlich zwischen jedem der beiden Flansche und dem verformbaren Zwischenstück noch jeweils ein aus elastischem Material, z.B. aus Gummi bestehender Körper eingefügt. Durch diese bekannte Anordnung soll die auf die beiden Flansche ausgeübte mechanische Last auf elektrischem Wege gemessen werden und zwar so, daß die mit Hilfe der lastempfindlichen Elemente, also z.B. den Dehnungsmeßstreifen erzielte Anzeige von der Wirkungslinie der Last durch das Zwischenstück im wesentlichen unabhängig ist.

Diese bekannte Einrichtung ermöglicht zwar das Erfassen von bestimmten Relativbewegungen eines Objekts und weist einen am Objekt befestigbaren Eingangsflansch, einen mit einer Grundplatte starr verbundenen Flansch und in der zweiten Realisierungsform darüber hinaus ein etwa ringförmig ausgeführtes Zwischenteil auf, das zwischen den beiden Flanschen angeordnet, mit diesen verdreh- und verschiebungssicher verbunden ist und aus einem Elastomer besteht und in dessen innerem Bereich eine Kräfte-Erfassungseinheit zum Ermitteln der relativen Bewegung der beiden Flansche zueinander vorgesehen ist.

Mit dieser bekannten Einrichtung lassen sich im wesentlichen nur vertikale Relativbewegungen eines Objekts erfassen und messen, aber keine seitlichen oder schrägen Relativbewegungen oder gar Drehauslenkungen.

Aus DD 277 330 A1 ist ein Ein/Aus-Kraftmesser mit einem auf einer Grundplatte gelagerten Gummiring bekannt, auf dem eine Deckplatte liegt, auf welche eine Kraft von oben wirkt, die gemessen werden soll. Am Innenumfang des Gummirings ist als Verbindungsteil ein offener federnder Ring angebracht, an dessen einem Ende ein elektrischer Sprungschalter und an dessen anderem Ende eine Justierschraube angebracht ist, die auf den Stößel des Sprungschalters drückt.

Die Auslösung des elektrischen Sprungschalters erfolgt also auf Grund der durch die einwirkende Kraft bewirkten Verformung des Gummirings, die eine Durchmesseränderung des federnden Rings zur Folge hat. Der Umfang des federnden Ringes verändert sich demgemäß um etwa das Dreifache, was zu einer höheren Ansprechsicherheit des Sprungschalters führt. Mit diesem bekannten Kraftmesser läßt sich im wesentlichen nur die Vertikalkomponente einer Kraft, also eine vertikale Relativbewegung eines Objekts, bestimmen. Ein Kraft-Momenten-Sensor, mit dem die verschiedenartigsten Relativbewegungen eines Objekts erfaßt und gemessen werden könnten, liegt auch hier nicht vor.

Aus DE 39 40 696 C2 ist ein Kraftsensor bekannt, der ein weitgehend lineares elektrisches Ausgangssignal in Abhängigkeit von der angreifenden Kraft bzw. dem zu erfassenden Weg hat, wobei keine Änderungen des Kraftangriffspunktes, sondern nur Längungen des Sensorkörpers in der Wirkrichtung der Kraft auftreten. Der Kraftsensor hat einen faltenartigen Aufbau und besteht in einem wirksamen Teilbereich aus einem mechanischelektrischen Wandlerelement, das bei Zugbeanspruchung des Sensors auf die Verkürzung der Oberfläche der Wandlerelemente anspricht, die durch deren Biegung um eine sich senkrecht zur Wirkungsrichtung der Kraft erstreckende Achse verursacht wird. Auch dieser bekannte Kraftsensor spricht im wesentlichen nur auf Relativbewegungen in einer Richtung, in diesem Fall in Längsrichtung des Kraftsensors an.

Zur Erfassung verschiedenartigster Relativbewegungen geeignet sind Kraft-Momenten-Sensoren, wie sie beispielsweise aus DE 36 11 336 C2 oder EP 0 240 023 B1 bekannt sind. Mit Hilfe eines solchen Kraft-Momenten-Sensors lassen sich Linearverschiebungen und/oder Drehauslenkungen erfassen und beispielsweise direkt in translatorische und rotatorische Bewegungen umsetzen. Damit können beispielsweise Automaten, Roboter Manipulatoren oder ähnliche Systeme gesteuert werden.

Sowohl die vorstehend angeführten Kraft-Momenten-Sensoren als auch alle gegenwärtig auf dem Markt befindlichen Kraft-Momenten-Sensoren haben nur eine verhältnismäßig begrenzte Steifigkeit, oder anders ausgedrückt, mit den bekannten Kraft-Momenten-Sensoren können keine großen Kräfte bzw. Drehmomente erfaßt und verarbeitet werden. Beispielsweise treten bei Robotern, an denen Schweißzangen angebracht sind, aufgrund des Hebelarms Drehmomente in der Größenordnung von 100 Nm und mehr auf. Derart hohe Drehmomente können jedoch mit keinem der zur Zeit im Handel befindlichen Kraft-Momenten-Sensoren erfaßt und/oder verarbeitet werden.

Aufgabe der Erfindung ist es daher, unter Verwendung eines Kraft-Momenten-Sensors eine Einrichtung zu schaffen, mit welcher Relativbewegungen von Objekten, insbesondere auch von großen und entsprechend schweren Objekten erfaßt werden können. Dabei sollen die verschiedenartigsten Relativbewegungen eines Objekts erfaßbar und meßbar sein, so daß sich die Meßergebnisse dann auswerten und insbesondere für eine genaue Kontrolle und Überwachung der momentanen Lage des Objekts heranziehen lassen, wobei anzumerken ist, daß es sich dabei um sehr große und schwere Objekte handeln kann.

Gemäß der Erfindung ist diese Aufgabe mit einer Einrichtung nach dem Oberbegriff des Anspruchs 1 durch die Merkmale in dessen kennzeichnendem Teil gelöst. Vorteilhafte Weiterbildungen und Verwendungsmöglichkeiten der Erfindung sind Gegenstand von Unteransprüchen.

Im Unterschied zu derjenigen Ausführungsform der Erfindung, bei welcher die Kappe der im inneren Bereich des Zwischenteils vorgesehenen Erfassungseinheit mit Kraft-Momenten-Sensor in der Mitte des Eingangsflansches befestigt ist und somit die translatorischen und rotatorischen Relativbewegungen vollständig erfaßt und umgesetzt werden, stehen bei der anderen Ausführungsform, bei welcher die Erfassungseinheit mit ihrer Kappe an einem im mittleren Bereich des etwa ringförmig ausgeführten Zwischenteils vorgesehenen und ins Innere desselben vorstehenden Verbindungsteil befestigt ist, jeweils nur etwa die halben translatorischen und rotatorischen Werte für eine Auswertung zur Verfügung.

Gemäß einer vorteilhaften Weiterbildung der Erfindung kann das mehrteilige Zwischenteil aus etwa ringförmigen Abschnitten mit etwa rechteckigem Querschnitt oder auch aus etwa kreisförmig angeordneten quaderförmigen Elementen gebildet sein. Ferner kann das mehrteilige Zwischenteil auch aus etwa kreisförmig angeordneten zylinderförmigen Elementen mit einem quadratischen, rechteckigen, polygonalen und/oder auch kreisförmigen Querschnitt ausgeführt sein.

Gemäß einer weiteren vorteilhaften Ausbildung der Erfindung können sowohl das etwa kreisringförmig ausgeführte einteilige Zwischenteil als auch das aus gleichen und/oder unterschiedlichen Elementen bestehende, etwa ringförmig ausgeführte mehrteilige Zwischenteil, vorzugsweise nach Art eines Fachwerks angeordnete, gleich und/oder unterschiedlich dimensionierte Stege und/oder auch Streben enthalten. Darüber hinaus können die Elemente eines mehrteiligen Zwischenteils auch als ein Hohlkörper mit kreuz- und/oder gitterförmiger Struktur ausgebildet sein.

Mit der erfindungsgemäßen Einrichtung können bei Verwenden von beispielsweise aus DE 36 11 336 C2 oder EP 0 240 023 B1 bekannten Kraft-Momenten-Sensoren, mit welchen beispielsweise translatorische Verschiebungen in der Größenordnung von maximal bis zu ± 1,5mm bzw. rotatorische Bewegungen in der Größenordnung von wenigen Winkelgrad erfaßt werden können, in Abhängigkeit von der Bemessung und Auslegung des aus Elastomer oder Gießharz hergestellten Zwischenteils auch durch Objekte mit einem Gewicht von weniger als einem Kilopond (kp) bis zu mehreren hundert Tonnen (t) hervorgerufene Relativbewegungen erfaßt und damit letztendlich gemessen werden.

Beispielsweise kann, um die vertikale Ausrichtung eines Krans zu kontrollieren bzw. sich andeutende Kipp- oder Neigebewegungen festzustellen, dieser Kran auf einer entsprechend bemessenen Plattform montiert werden, unter welcher wiederum eine Anzahl von drei, vier oder mehr der erfindungsgemäßen Einrichtungen angeordnet ist, deren Zwischenelemente entsprechend den zu erwarteten Belastungen bzw. Beanspruchungen ausreichend dimensioniert sind.

Durch eine solche Anordnung von erfindungsgemäß ausgeführten Einrichtungen unter der Plattform, auf welcher der Kran montiert ist, wird jede geringfügige Abweichung von der Vertikalen und somit jeder sich andeutende Neigewinkel ohne Schwierigkeit sofort erfaßt, so daß gegebenenfalls rechtzeitig Gegenmaßnahmen ergriffen werden können. Auf diese Weise kann beispielsweise auch ein Einknicken eines Lastkrans vermieden werden.

Statt eines Krans kann auf einer entsprechend dimensionierten Plattform beispielsweise auch ein Roboter, eine Werkzeugmaschine sowie jede in Funktion und Ausführung entsprechend ausgelegte Maschine montiert werden. Eine weitere Einsatzmöglichkeit der erfindungsgemäßen Einrichtung besteht darin, diese beispielsweise am Ende eines Roboterarms und beispielsweise einer von dem Roboter bewegten Halte- oder Greifvorrichtung anzubringen.

Ferner können die erfindungsgemäßen Einrichtungen bei der Kraftfahrzeug-Endmontage in vorteilhafter Weise eingesetzt werden, indem jeweils mindestens eine der erfindungsgemäßen Einrichtungen in oder an Dornen von Gestellen vorgesehen wird, auf welchen Rahmen positioniert sind, an die wiederum weitere Rahmen- und/oder Karosserieteile eines zu erstellenden Kraftfahrzeugs, beispielsweise mittels Schweißzangen befestigt werden.

Sobald über die vom Roboter gesteuerte Schweißzange ein erster Punkt gesetzt ist, wird dadurch eine Kraft bzw. ein Druck auf das Gestell ausgeübt. In diesem Moment werden von jedem Sensor der in oder an den Dornen vorgesehenen erfindungsgemäßen Einrichtungen sechs mögliche Freiheitsgrade erfaßt und gemessen.

Das bedeutet, bei beispielsweise vier Kraft-Momenten-Sensoren, die an oder in vier verschiedenen Dornen des Gestells vorgesehen sind, ergeben sich (4 x 6) Freiheitsgrade, d.h. es können gewissermaßen 24 sogenannte Eingangsneurosen trainiert werden, die ausgewertet werden können, wodurch dann genau festgelegt ist, wo der erste Schweißpunkt gesetzt worden ist.

Bei dem nächsten, d.h. zweiten Schweißpunkt kann auf diese Weise sichergestellt werden, daß er richtig gesetzt ist. Somit kann durch Verwenden der erfindungsgemäßen Einrichtungen bzw. der in diesen vorgesehenen Kraft-Momenten-Sensoren eine absolute Positioniergenauigkeit zwischen Roboter und Rahmen hergestellt werden, mit der Folge, daß auch alle weiteren Schweißpunkte sehr exakt gesetzt werden.

Dasselbe Ergebnis kann auch erreicht werden, wenn erfindungsgemäße Einrichtungen unter einen Roboter gesetzt werden. Dadurch kann eine vom Roboter ausgeübte Kraft als Reaktionskraft gemessen werden und zusätzlich genau die Stelle festgelegt werden, an welcher die ausgeübte Kraft aufgebracht worden ist. Somit muß die erfindungsgemäße Einrichtung nicht unbedingt in einem Robotergelenk angebracht werden, sondern wie bereits ausgeführt, kann der Roboter auf eine entsprechend dimensionierte Plattform montiert werden, unter welcher eine Anzahl von beispielsweise drei, vier oder mehr Einrichtungen mit jeweils einem Kraft-Momenten-Sensor angeordnet ist.

Die erfindungsgemäße Einrichtung kann ferner auch beispielsweise im Sicherheitsbereich einer Bank zum Einsatz kommen. Für diesen Fall wird unter einer entsprechend bemessenen Laufplatte eine Anzahl der erfindungsgemäßen Einrichtungen mit Kraft- und Momenten-Sensoren angeordnet. Sobald eine Person über eine in der vorstehend beschriebenen Weise "präparierte" Platte läuft, kann deren Schrittfolge und Gangart genau aufgezeichnet werden, wodurch ein nur für diese Person typisches Laufbild erhalten wird, das genau so einmalig ist wie beispielsweise ein Fingerabdruck.

Nachfolgend wird die Erfindung unter Bezugnahme auf die Zeichnungen im einzelnen erläutert. Es zeigen:
- Fig.1: in einer perspektivischen Wiedergabe eine schematische teilweise aufgeschnittene Darstellung einer ersten Ausführungsform einer Einrichtung zum Erfassen von Relativbewegungen;
- Fig.2: ebenfalls in perspektivischer Wiedergabe eine schematische, teilweise aufgeschnittene Darstellung einer Modifizierung der in Fig.1 wiedergegebenen Ausführungsform;
- Fig.3: eine schematische Darstellung einer einen optoelektronischen Kraft-Momenten-Sensor enthaltenden Erfassungseinheit mit teilweise aufgeschnittener Kappe, und
- Fig.4: die in der Erfassungseinheit von Fig.3 vorgesehene opto-elektronische Anordnung.

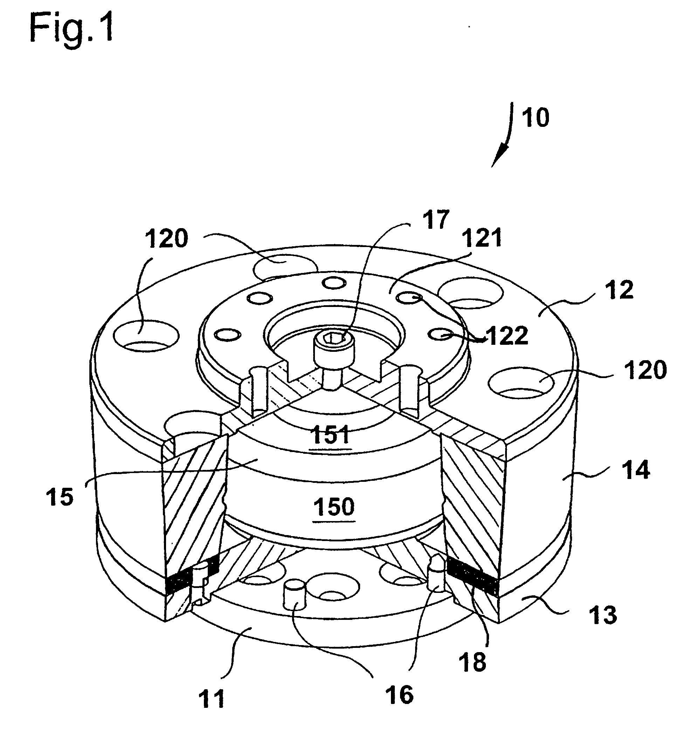

In Fig.1 ist in einer perspektivischen Wiedergabe eine erste schematische, teilweise aufgeschnittene erste Ausführungsform einer in ihrer Gesamtheit mit 10 bezeichneten Einrichtung zum Erfassen von Relativbewegungen dargestellt. In Fig.1 weist die Einrichtung 10 einen kreisförmigen Eingangsflansch 12 auf, der mit einem Halterungsring 121 eine Einheit bildet, in welcher eine Anzahl vorzugsweise mit Innengewinde versehener Bohrungen 122 vorgesehen ist. An dem Halterungsring 121 wird das Objekt, dessen Relativbewegungen erfaßt werden sollen, beispielsweise mittels Schrauben befestigt.

In der Darstellung der Fig.1 ist unterhalb des Eingangsflansches 12 ein etwa ringförmig ausgeführtes einteiliges Zwischenteil 14 vorgesehen, das eine etwa rechteckige, in der aufgeschnittenen Darstellung schraffiert wiedergegebene Querschnittsfläche mit Entformungsschräge aufweist. Das Zwischenteil 14 besteht aus Elastomer oder Gießharz, wie beispielsweise duroplastischem Polyurethan. In im Eingangsflansch 12 vorgesehene Öffnungen 120 kann bei großen Belastungen gegebenenfalls Material des Zwischenteil 14 ausweichen.

An der dem Eingangsflansch abgewandten Unterseite des Zwischenteils 14 ist über ein in der aufgeschnittenen Darstellung dunkel wiedergegebenes Verbindungselement 18 ein weiterer Flansch 13 vorgesehen, welcher auf einer in der Darstellung der Fig.1 kreisförmigen Grundplatte 11 befestigt ist. Von der Grundplatte 11 stehen in Richtung des Zwischenteils 14 für eine korrekte kartesische Orientierung benötigte Indexbolzen 16 vor.

Um eine verdreh- und verschiebungssichere Verbindung zwischen dem Eingangsflansch 12 einerseits und dem Verbindungselement 18 bzw. dem Flansch 13 zu gewährleisten, sind beispielsweise sowohl die Unterseite des Eingangsflansches 12, die Ober- und Unterseiten des Zwischenteils 14 sowie des Verbindungselements 18 und die dem Zwischenelement 14 zugewandte Fläche des Flansches 13 mit in der Darstellung der Fig.1 nicht näher wiedergegebenen Riffelungen u.ä. versehen.

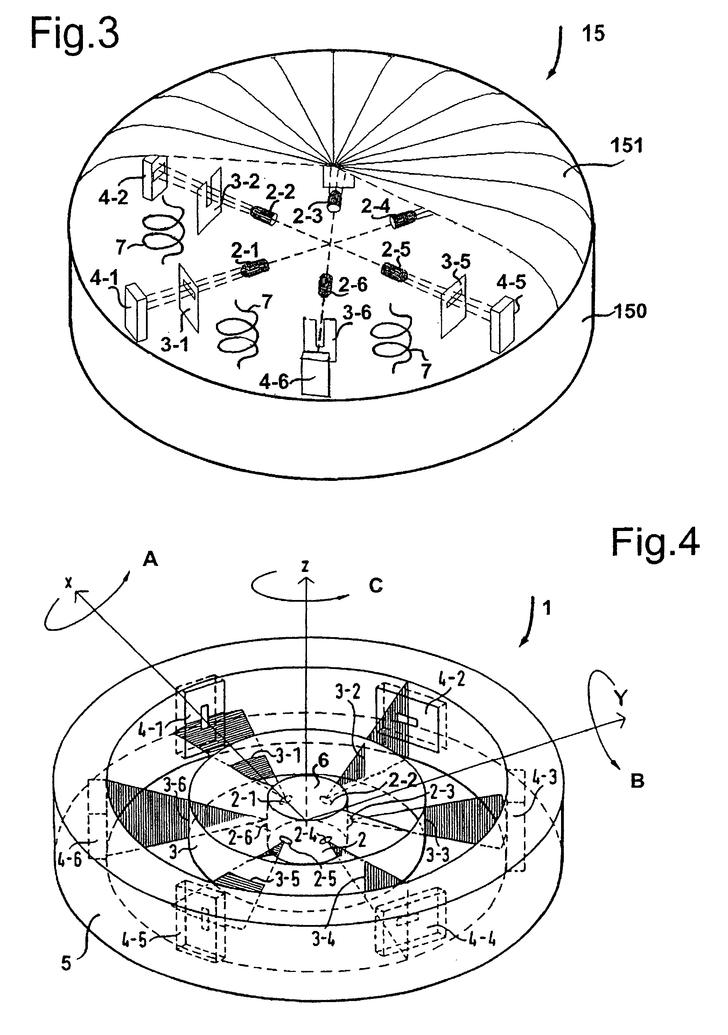

Im mittleren freien Bereich des etwa kreisringförmig ausgeführten Zwischenteils 14 ist eine in ihrer Gesamtheit mit 15 bezeichnete Erfassungseinheit wiedergegeben, in deren Innerem beispielsweise ein sowohl in Fig.3 als auch in Fig.4 schematisch wiedergegebener, aus DE 36 11 336 C2 oder EP 0 240 023 B1 bekannter Kraft-Momenten-Sensor 1 in Form einer opto-elektronischen Anordnung vorgesehen ist. Die Erfassungseinheit 15 weist in der dargestellten Ausführungsform eine Kappe 150 auf, deren kreiszylinderförmiger Randbereich in eine gewölbte Kappenoberfläche 151 übergeht.

Die gewölbte Kappenoberfläche 151 ist mittels eines Befestigungselements 17, beispielsweise in Form einer Imbusschraube, in der Mitte des Eingangsflansches 12 befestigt. Wie nachstehend noch im einzelnen beschrieben wird, kann der kreiszylinderförmige Randbereich der Kappe 150 beispielsweise mit einem zylindrischen Ring 5 verbunden sein, an welchem bei der in Fig.4 dargestellten Ausführungsform eine Anzahl photoempfindlicher Detektoren 4-1 bis 4-6 angebracht ist.

Sobald durch ein an dem Eingangsflansch 12 befestigtes Objekt Kräfte und/oder Drehmomente auf die Erfassungseinheit 15 mit dem Kraft-Momenten-Sensor 1 ausgeübt werden, bewirken sowohl die Kräfte als auch die Drehmomente eine entsprechende Verformung des Zwischenelements 14. Die dabei entstehenden translatorischen bzw. rotatorischen Relativbewegungen zwischen dem Eingangsflansch 12 und dem auf der Grundplatte 11 befestigten Flansch 13 werden durch das Befestigungselement 17 von dem Eingangsflansch 12 über die gewölbte Kappenoberfläche 151 an den mit der Kappe 150 in der vorstehend beschriebenen Weise verbundenen Ring 5 der als Kraft-Momenten-Sensor dienenden opto-elektronischen Anordnung übertragen. Aufbau und Wirkungsweise der opto-elektronischen Anordnung werden nachstehend unter Bezugnahme auf Fig.3 und 4 im einzelnen näher erläutert.

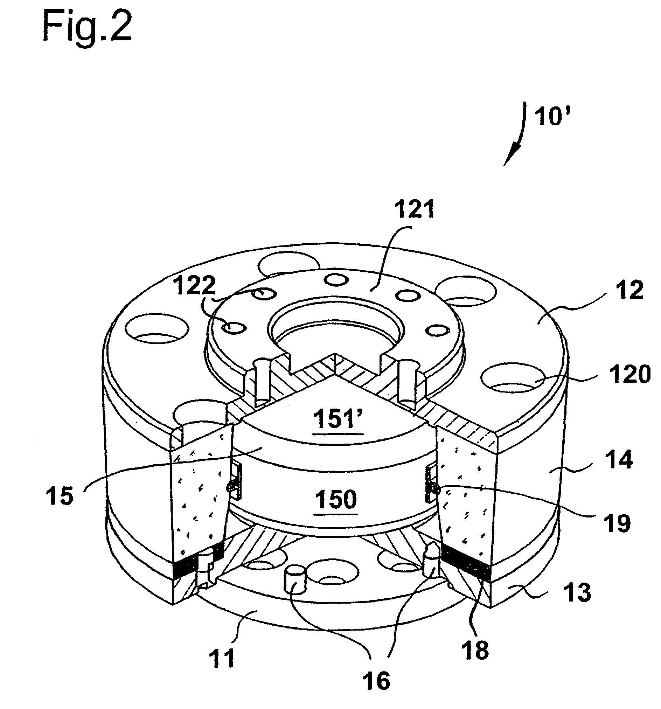

Der einzige Unterschied zwischen der Ausführungsform der erfindungsgemäßen Einrichtung 10 in Fig.1 und der Einrichtung 10 in Fig.2 besteht darin, daß im Unterschied zu Fig.1 die Erfassungseinheit 15 mit dem in ihrem Inneren vorgesehenen Kraft-Momenten-Sensor 1 nicht an dem Eingangsflansch befestigt ist, sondern in Fig.2 über den kreiszylinderförmigen Rand der Kappe 150 mit einem Verbindungsteil 19 verbunden ist, das im mittleren Bereich des Zwischenteils 14 verdrehsicher gehaltert ist.

Aufgrund der Übertragung über das im mittleren Bereich des Zwischenteils 14 angebrachte Verbindungsteil 19 stehen in der Erfassungseinheit 15 in diesem Fall immer nur etwa die halben translatorischen und rotatorischen Werte für eine Auswertung zur Verfügung.

In Fig.3 ist schematisch eine Erfassungseinheit 15 mit Kraft-Momenten-Sensor in Form einer in Fig.4 schematisch wiedergegebenen opto-elektronischen Anordnung dargestellt. In Fig. 3 weist die schematisch wiedergegebene Einheit 15 eine in der dargestellten Ausführungsform kreiszylinderförmige Kappe 150 mit einer gewölbten Kappenoberfläche 151 auf, die in Fig.3 teilweise aufgeschnitten ist, so daß ein Teil des schematisch dargestellten Aufbaus eines schematisch angedeuteten Kraft-Momenten-Sensors 1 in Form der opto-elektronischen Anordnung zu erkennen ist.

In der in Fig. 4 schematisch wiedergegebenen opto-elektronischen Anordnung sind sechs lichtemittierende Einrichtungen 2-1 bis 2-6, vorzugsweise in Form von sechs lichtemittierenden Dioden, in einer Ebene angeordnet. Den lichtemittierenden Einrichtungen 2-1 bis 2-6 ist in einem festen Abstand jeweils eine Schlitzblende 3-1 bis 3-6 zugeordnet. Hierbei sind benachbarte Schlitzblenden in einem zylindrischen Ring 3 hinsichtlich ihrer Hauptausdehnungsrichtung jeweils um 90° gegeneinander versetzt ausgebildet, so daß beispielsweise der Schlitz der Schlitzblende 3-1 horizontal und die Schlitze der beiden benachbarten Schlitzblenden 3-2 und 3-6 vertikal ausgerichtet sind.

In der opto-elektronischen Anordnung von Fig.4 sind sechs positionsempfindliche photosensitive Detektoren 4-1 bis 4-6 in einem zylindrischen Ring 5 bezüglich der ihnen zugeordneten Schlitzblenden 3-1 bis 3-6 entsprechend ausgerichtet angeordnet. Ferner kann der Ring 5 mit den sechs positionsempfindlichen Detektoren 4-1 bis 4-6 fest an der Innenseite der zylinderförmigen Kappe 150 (Fig.3) angebracht sein.

Da die sechs lichtemittierenden Einrichtungen 2-1 bis 2-6 in Fig.4 in einer schematisch als Zylinder angedeuteten Halterungseinrichtung 6 untergebracht sind, welche ihrerseits in der Erfassungseinheit 15 stationär angeordnet ist, ist über die Kappe 8 der mit dieser fest verbundene Ring 5 mit den daran angebrachten sechs positionsempfindlichen Detektoren 4-1 bis 4-6 gegenüber der stationären Anordnung aus den sechs lichtemittierenden Einrichtungen 2-1 bis 2-6 und dem ihr fest zugeordneten Schlitzblendenring 3 bewegbar.

Die stationäre, in Fig.4 schematisch als Zylinder angedeutete Halterungseinrichtung 6 kann bei einer praktischen Ausführungsform beispielsweise auch als eine stationäre Scheibe ausgeführt sein, deren Durchmesser etwa dem Außendurchmesser des die positionsempfindlichen Detektoren 4-1 bis 4-6 tragenden Ringes 5 entspricht und welche über oder unter dem Ring 5 angeordnet sein kann.

Zwischen dem die positionsempfindlichen Detektoren 4-1 bis 4-6 tragenden Ring 5 und einer solchen scheibenförmigen Halterungseinrichtung 6 sind Federelemente 7 (siehe Fig.3) in Form von Schraubenfedern vorgesehen, welche mittels nicht näher dargestellter Schraubbolzen sowohl dem Ring 5 als auch der Halterungseinrichtung 6 fest zugeordnet sind.

Durch die Schraubenfedern 7 wird erreicht, daß der die Detektoren 4-1 bis 4-6 tragende Ring 5 über die Kappe 150 bezüglich der stationären Anordnung der lichtemittierenden Dioden 2-1 bis 2-6 und dem diesen fest zugeordneten Schlitzblendenring 3 in Richtung der drei Achsen X, Y, Z eines rechtwinkligen räumlichen Koordinatensystems und um diese drei Achsen bewegbar ist und nach jeder Linearverschiebung oder Drehauslenkung jeweils wieder in seine Ausgangslage zurückkehrt.

Die sechs lichtemittierenden Dioden 2-1 bis 2-6 sind in gleichen Winkelabständen voneinander, d.h. unter einem Winkel von 60°, in einer Ebene angeordnet und weisen die abwechselnd zu dieser Ebene horizontal und vertikal ausgerichteten Schlitzblenden 3-1 bis 3-6 auf. Wie aus der Lage der einzelnen Schlitzblenden 3-1 bis 3-6 und der durch Schraffur hervorgehobenen und von den einzelnen Dioden 2-1 bis 2-6 ausgehenden Ebenen zu ersehen ist, sind die Achsen der einzelnen positionsempfindlichen Detektoren 4-1 bis 4-6 immer senkrecht zu den ihnen zugeordneten Schlitzblenden 3-1 bis 3-6 ausgerichtet.

Mit dieser opto-elektronischen Anordnung ist eine vollständige Erfassung aller sechs möglichen Bewegungskomponenten, nämlich der drei translatorischen Bewegungen in Richtung der drei Achsen X, Y und Z eines rechtwinkligen räumlichen Koordinatensystems und der drei rotatorischen Bewegungen A, B und C um die drei Achsen X, Y und Z erreicht.

Da die Kappe 150 fest an dem die Detektoren 4-1 bis 4-6 tragenden Ring 5 angebracht ist und dieser Ring 5 mittels der Federelemente 7 (Fig.3) federnd mit der stationären Halterungseinrichtung 6 verbunden ist, welche die sechs Dioden 2-1 bis 2-6 und die diesen zugeordneten Schlitzblenden 3-1 bis 3-6 trägt, halten die Federelemente 7 das gesamte Meßsystem in der mechanischen Nullstellung, wenn weder Kraft noch ein Drehmoment auf die Kappe 150 aufgebracht werden.

In Abwandlung der in Fig.4 dargestellten opto-elektronischen Anordnung sind die photoempfindlichen Detektoren 4-1 bis 4-6 an einem stationär angeordneten Ring angebracht, der beispielsweise dem in Fig.4 dargestellten Ring entspricht. Dann sind jedoch im Unterschied zu der in Fig.4 dargestellten Anordnung die Schlitzblenden 3-1 und 3-6 gemeinsam auf einem beispielsweise etwa kreisringförmigen Tragteil angeordnet, das mit der Innenseite der gewölbten Kappenfläche 151 der Erfassungseinheit 15 verbunden ist.

Ferner sind im Unterschied zu der opto-elektronischen Anordnung der Fig.4 zwischen dem die Schlitzblenden 3-1 bis 3-6 tragenden Teil einerseits und dem stationär angeordneten Ring mit den an ihm angebrachten positionsempfindlichen Detektoren 4-1 bis 4-6 sowie den stationär angeordneten lichtemittierenden Einrichtungen 2-1 bis 2-6 andererseits Federelemente vorgesehen, so daß das Tragteil und somit die auf ihm vorgesehenen Schlitzblenden 3-1 bis 3-6 bezüglich der stationären Anordnung aus den positionsempfindlichen Detektoren und den lichtemittierenden Einrichtungen so bewegbar sind, daß sie immer wieder in ihre Ausgangslage zurückkehren.

Der Unterschied zwischen der vorstehend beschriebenen opto-elektronischen Anordnung und der anhand von Fig.4 beschriebenen opto-elektronischen Anordnung besteht somit darin, daß nunmehr die Schlitzblenden 3-1 bis 3-6 relativ sowohl zu den stationär angeordneten lichtemittierenden Einrichtungen 2-1 bis 2-6 als auch relativ zu den ebenfalls stationär angeordneten positionsempfindlichen Detektoren 4-1 bis 4-6 bewegbar sind.

Ein Vorteil der vorstehend beschriebenen Anordnung gegenüber der in Fig.4 dargestellten Anordnung besteht darin, daß das Tragteil mit den Schlitzblenden 3-1 bis 3-6 zum einen ein erheblich geringeres Gewicht hat als der Ring 5 mit den photoempfindlichen Detektoren 4-1 bis 4-6 und zum anderen es sich bei den Schlitzblenden 3-1 bis 3-6 um passive Elemente handelt, die nicht über Leitungen mit Strom versorgt zu werden brauchen.

Bei der opto-elektronischen Anordnung ist jedem positionsempfindlichen Detektor je eine eigene Lichtquelle zugeordnet, welche durch eine einfache Regelelektronik angesteuert wird. Mit Hilfe dieser Regelelektronik werden dann beispielsweise unterschiedliche Detektor-Empfindlichkeiten, unterschiedliche Leuchtdioden-Wirkungsgrade, Toleranzen in den elektronischen Bauelementen sowie Temperaturdriften automatisch und schnell ausgeregelt. Somit ist auch kein zusätzlicher Abgleich erforderlich.

## Patentansprüche

1. Einrichtung zum Erfassen von Relativbewegungen eines Objekts mit einem am Objekt befestigbaren Eingangsflansch (12), einem mit einer Grundplatte (11) starr verbundenen Flansch (13) und einem etwa ringförmig ausgeführten, einteiligen oder aus nebeneinander angeordneten Elementen etwa ringförmig ausgeführten, mehrteiligen Zwischenteil (14), das zwischen den beiden Flanschen (12,13) angeordnet, mit diesen verdreh- und verschiebungssicher verbunden ist und aus einem Elastomer oder Gießharz besteht und in dessen innerem Bereich eine Kräfte-Erfassungseinheit (15) zum Ermitteln der relativen Bewegung der beiden Flansche (12,13) zueinander vorgesehen ist, **dadurch gekennzeichnet, daß** die Kräfte-Erfassungseinheit (15) eine stationäre Halterungseinrichtung (6) und eine gegenüber dieser Halterungseinrichtung (6) beweglich gelagerte Kappe (150) sowie einen Kraft-Momenten-Sensor (1) enthält, der die drei möglichen translatorischen und die drei möglichen rotatorischen Bewegungen der Kappe (150) bezüglich der Halterungseinrichtung (6) erfaßt, und daß die Erfassungseinheit (15) mit ihrer Kappe (150) in der Mitte des Eingangsflansches (12) und mit ihrer Halterungseinrichtung (6) am anderen Flansch (13) so befestigt ist, daß sie das Zwischenteil (14) nicht berührt, oder in davon abweichender Weise mit ihrer Kappe (150) an einem im mittleren Bereich des etwa ringförmig ausgeführten Zwischenteils (14) vorgesehenen und ins Innere desselben vorstehenden Verbindungsteil (19) und mit ihrer Halterungseinrichtung (6) am anderen Flansch (13) befestigt ist, so daß translatorische und rotatorische Relativbewegungen zwischen dem Eingangsflansch (12) und dem auf der Grundplatte (11) befestigten Flansch (13) über das Zwischenteil (14) an die Erfassungseinheit (15) und den darin enthaltenen Kraft-Momenten-Sensor (1) übertragen werden.

2. Einrichtung nach Anspruch 1, **dadurch gekennzeichnet, daß** das mehrteilige Zwischenteil (14) aus ringförmigen Abschnitten mit etwa rechteckigem Querschnitt gebildet ist.

3. Einrichtung nach Anspruch 1, **dadurch gekennzeichnet, daß** das mehrteilige Zwischenteil (14) aus etwa kreisförmig angeordneten quaderförmigen Elementen gebildet ist.

4. Einrichtung nach Anspruch 1, **dadurch gekennzeichnet, daß** das mehrteilige Zwischenteil (14) aus etwa kreisförmig angeordneten zylinderförmigen Elementen mit quadratischem, rechteckigem, polygonalem und/oder kreisförmigem Querschnitt gebildet ist.

5. Einrichtung nach einem der vorhergehenden Ansprüche, **dadurch gekennzeichnet, daß** das etwa ringförmig ausgeführte einteilige Zwischenteil (14) oder das aus gleichen und/oder unterschiedlichen Elementen gebildete, etwa ringförmig ausgeführte Zwischenteil (14) nach Art eines Fachwerks angeordnete, gleich und/oder unterschiedlich dimensionierte Stege und/oder Streben enthält.

6. Einrichtung nach einem der vorhergehenden Ansprüche, **dadurch gekennzeichnet, daß** die Elemente eines mehrteiligen Zwischenteils Hohlkörper mit kreuz- und/oder gitterförmiger Struktur sind.

7. Einrichtung nach einem der vorhergehenden Ansprüche, **dadurch gekennzeichnet, daß** das Elastomer oder Gießharz duroplastisches Polyurethan ist.

8. Einrichtung nach Anspruch 1, **dadurch gekennzeichnet, daß** im Inneren der Erfassungseinheit (15) als Kraft-Momenten-Sensor (1) eine opto-elektronische Anordnung zum gleichzeitigen Erfassen von sechs Komponenten (X, Y, Z; A, B, C) in bzw. um die drei Achsen (X, Y, Z) eines rechtwinkligen räumlichen Koordinatensystems vorgesehen ist, wobei jede von mindestens sechs in gleichen Winkelabständen voneinander in einer Ebene angebrachten lichtemittierenden Einrichtungen (2-1 bis 2-6) mit jeweils vorgeschalteter, fest zugeordneter Schlitzblende (3-1 bis 3-6) gegenüber je einem mit seiner Detektorachse senkrecht zur Schlitzrichtung der jeweils zugeordneten Schlitzblende (3-1 bis 3-6) ausgerichteten, positionsempfindlichen Detektor (4-1 bis 4-6) so vorgesehen ist, daß entweder die lichtemittierenden Einrichtungen (2-1 bis 2-6) mit zugeordneten Schlitzblenden (3-1 bis 3-6) und die positionsempfindlichen Detektoren (4-1 bis 4-6) relativ gegeneinander bewegbar sind oder die Schlitzblenden (3-1 bis 3-6) und die lichtemittierenden Einrichtungen (2-1 bis 2-6) sowie die positionsempfindlichen Detektoren (4-1 bis 4-6) relativ gegeneinander bewegbar sind.

9. Einrichtung nach Anspruch 8, **dadurch gekennzeichnet, daß** sechs lichtemittierende Einrichtungen (2-1 bis 2-6) mit jeweils in einem festen Abstand vorgelagerter Schlitzblende (3-1 bis 3-6) stationär vorgesehen sind, daß benachbarte Schlitzblenden hinsichtlich ihrer Hauptausdehnungsrichtung jeweils um 90° versetzt ausgebildet sind und daß sechs gemeinsam in bezug auf die Schlitzblenden (3-1 bis 3-6) bewegliche, positionsempfindliche Detektoren (4-1 bis 4-6) vorgesehen sind, deren jeweilige Detektorachse senkrecht zur Schlitzrichtung der jeweils zugeordneten Schlitzblende (3-1 bis 3-6) ausgerichtet ist.

10. Einrichtung nach Anspruch 8, **dadurch gekennzeichnet, daß** die sechs lichtemittierenden Einrichtungen (2-1 bis 2-6) und die bezüglich diesen entsprechend ausgerichteten positionsempfindlichen Detektoren (4-1 bis 4-6) stationär vorgesehen sind, und die in festem Abstand jeweils von den lichtemittierenden Einrichtungen (2-1 bis 2-6) angeordneten Schlitzblenden (3-1 bis 3-6), wobei benachbarte Schlitzblenden hinsichtlich ihrer Hauptausdehnungsrichtung jeweils um 90° versetzt ausgebildet sind, bezüglich der positionsempfindlichen Detektoren (4-1 bis 4-6) gemeinsam beweglich angeordnet sind.

11. Einrichtung nach Anspruch 8 oder 9, **dadurch gekennzeichnet, daß** die positionsempfindlichen Detektoren (4-1 bis 4-6) auf der Innenseite eines zylindrischen Ringes (5) entsprechend ausgerichtet angeordnet sind, der an der Innenseite einer Kappe (8) der Erfassungseinheit (15) fest angebracht ist und der über zwischen dem Ring (5) und einer in der Mitte die lichtemittierenden Einrichtungen (2-1 bis 2-6) tragenden Halterungseinrichtung (6) vorgesehene Federelemente (7) bezüglich der stationären Anordnung aus den mindestens sechs lichtemittierenden Einrichtungen (2-1 bis 2-6) und den diesen jeweils zugeordneten mindestens sechs Schlitzblenden (3-1 bis 3-6) so bewegbar ist, daß der Ring (5) immer wieder in seine Ausgangslage zurückkehrt.

12. Einrichtung nach Anspruch 8 oder 10, **dadurch gekennzeichnet, daß** die positionsempfindlichen Detektoren (4-1 bis 4-6) bezüglich der stationären Anordnung aus den lichtemittierenden Einrichtungen (2-1 bis 2-6) ortsfest und entsprechend ausgerichtet angeordnet sind, und die Schlitzblenden (3-1 bis 3-6), die gemeinsam auf einem mit der Innenseite der gewölbten Kappenoberfläche (151) der Erfassungseinrichtung (15) verbundenen Tragteil angeordnet sind, über zwischen dem Tragteil und der stationären Anordnung aus den positionsempfindlichen Detektoren (4-1 bis 4-6) und den lichtemittierenden Einrichtungen (2-1 bis 2-6) vorgesehene Federelemente (7) so bewegbar sind, daß das Tragteil und somit die auf ihm angeordneten Schlitzblenden (3-1 bis 3-6) immer wieder in ihre Ausgangslage zurückkehren.

13. Einrichtung nach einem der Ansprüche 8, 9 oder 11, **dadurch gekennzeichnet, daß** die mindestens sechs lichtemittierenden Einrichtungen (2-1 bis 2-6) in einer Halteeinrichtung (6) untergebracht sind, mit der ein zylindrischer Ring (3) fest verbunden ist, in welchem in den gleichen Winkelabständen wie die an der Halterungseinrichtung (6) angebrachten lichtemittierenden Einrichtungen (2-1 bis 2-6) und diesen in radialer Richtung gegenüberliegend abwechselnd hinsichtlich ihrer Hauptausdehnungsrichtung jeweils um 90° gegeneinander versetzte Schlitzblenden (3-1 bis 3-6) vorgesehen sind.

14. Verwendung einer Einrichtung nach einem der Ansprüche 1 bis 13, wobei die Einrichtung (10, 10') am Ende eines Roboterarms zwischen diesem und beispielsweise einer Halte- oder Greifvorrichtung angebracht ist.

15. Verwendung von Einrichtungen nach einem der Ansprüche 1 bis 13, wobei eine Anzahl von mindestens drei oder vier der Einrichtungen (10, 10') unter einer Plattform angeordnet ist, auf welcher ein Roboter, eine Werkzeugmaschine, ein Kran oder eine in Funktion und Ausführung entsprechend ausgelegte Maschine montiert ist.

16. Verwendung von Einrichtungen nach einem der Ansprüche 1 bis 13 bei der Kraftfahrzeug-Endmontage, wobei mindestens eine der Einrichtungen (10, 10') in oder an jedem der Dorne von Gestellen vorgesehen ist, auf denen Rahmen positioniert sind, an die weitere Rahmen- und/oder Karosserieteile eines Kraftfahrzeugs mittels Schweißzangen befestigt werden.

17. Verwendung von Einrichtungen nach einem der Ansprüche 1 bis 13, wobei eine Anzahl der Einrichtungen (10, 10') unter einer vor dem Zugang zu einem Sicherheitsbereich angeordneten Laufplatte angeordnet ist.

## Claims

1. A means for sensing relative motions of an object comprising an input flange (12) securable to the object, a flange (13) rigidly connected to a base plate (11) and a roughly annular configured intermediate part (14) configured in one piece or of several pieces comprising elements arranged juxtaposed, the intermediate part (14) being disposed between the two flanges (12,13) non-rotatably and non-shiftably connected thereto and made of an elastomer or cast resin and in the interior portion of which a force-sensing unit (15) is provided for sensing the motions of the two flanges (12,13) each relative to the other, **characterized in that** said force-sensing unit (15) comprises a stationary supporting means (6) and a cap (150) movably mounted relative to said supporting means (6) as well as a force/moment sensor (1) for sensing the three possible translational and three possible rotational motions of said cap (150) relative to said supporting means (6) and that said sensing unit (15) with its cap (150) is secured in the middle of said input flange (12) and by its supporting means (6) to the other flange (13) so that it is not in contact with said intermediate part (14) or in a departure therefrom is secured to the other flange (13) via its cap (150) to a connector (19) provided in the middle portion of said roughly annular configured intermediate part (14) and protruding into the interior thereof and to its supporting means (6) so that translational and rotational relative motions between said input flange (12) and said flange (13) secured to said base plate (11) are communicated via said intermediate part (14) to said sensing unit (15) and said force/moment sensor (1) contained therein.

2. The means as set forth in claim 1, **characterized in that** said multi-piece intermediate part (14) is formed of annular sections of roughly rectangular cross-section.

3. The means as set forth in claim 1, **characterized in that** said multi-piece intermediate part (14) is formed of cuboidal elements arranged roughly circular.

4. The means as set forth in claim 1, **characterized in that** said multi-piece intermediate part (14) is formed of cylindrical elements arranged roughly circular of square, rectangular, polygonal and/or circular cross-section.

5. The means as set forth in any of the preceding claims, **characterized in that** said roughly circular configured one-piece intermediate part (14) or said multi-piece intermediate part (14) likewise configured roughly circular but consisting of the same and/or differently dimensioned elements contains webs and/or also trusses arranged in the form of a latticework.

6. The means as set forth in any of the preceding claims, **characterized in that** said elements of a multi-piece intermediate part (14) are configured as a hollow body having a cross and/or grid-like structure.

7. The means as set forth in any of the preceding claims, **characterized in that** said elastomer or cast resin is thermosetting polyurethane.

8. The means as set forth in claim 1, **characterized in that** provided in the interior of said sensing unit (15) as said force/moment sensor is an optoelectronic assembly for simultaneously sensing six components (X,Y,Z;A,B,C) in or about the three axes (X,Y,Z) of a rectangular system of spatial coordinates, each of said at least six light-emitting means (2-1 to 2-6) mounted equispaced angularly from each other in a single plane including slotted apertures (3-1 to 3-6) each fixedly assigned in said input is provided opposite a position-sensing detector (4-1 to 4-6) each oriented with its detector axis perpendicular to the slot direction of each assigned slotted aperture (3-1 to 3-6) so that either said light-emitting means (2-1 to 2-6) with said assigned slotted apertures (3-1 to 3-6) and said position-sensing detectors (4-1 to 4-6) are movable relative to each other or said slotted apertures (3-1 to 3-6) and said light-emitting means (2-1 to 2-6) as well as said position-sensing detectors (4-1 to 4-6) are movable relative to each other.

9. The means as set forth in claim 8, **characterized in that** six light-emitting means (2-1 to 2-6) each including an input slotted aperture (3-1 to 3-6) at a fixed spacing are provided stationary, that adjacent slotted apertures are configured each offset by 90° relative to their main direction of extension and that six position-sensing detectors (4-1 to 4-6) movable in common relative to said slotted apertures (3-1 to 3-6) are provided, the detector axis of each of which is oriented perpendicular to the slot direction of each assigned slotted aperture (3-1 to 3-6).

10. The means as set forth in claim 8, **characterized in that** six light-emitting means (2-1 to 2-6) and said position-sensing detectors (4-1 to 4-6) oriented correspondingly thereto are provided stationary and said slotted apertures (3-1 to 3-6) arranged at a fixed spacing from said light-emitting means (2-1 to 2-6), adjacent slotted apertures being configured each offset by 90° relative to their main direction of extension and arranged movable in common relative to said position-sensing detectors (4-1 to 4-6).

11. The means as set forth in claim 8 or 9, **characterized in that** said position-sensing detectors (4-1 to 4-6) are arranged correspondingly oriented on the inner side of a cylindrical ring (5) fixedly secured to the inner side of a cap (8) of said sensing unit (15) and movable via spring elements (7) provided between said cylindrical ring (5) and a supporting means (6) mounting said light-emitting means (2-1 to 2-6) in the middle relative to said stationary assembly of at least six light-emitting means (2-1 to 2-6) and said at least six slotted apertures (3-1 to 3-6) each assigned thereto so that said cylindrical ring (5) is always returned to its starting position.

12. The means as set forth in claim 8 or 10, **characterized in that** said position-sensing detectors (4-1 to 4-6) are arranged stationary and correspondingly oriented relative to the stationary assembly of said light-emitting means (2-1 to 2-6) and said slotted apertures (3-1 to 3-6) arranged in common on a supporting part connected to the inner side of said domed cap surface (151) of said sensing unit (15) and movable via spring elements (7) provided between said supporting part and the stationary assembly of said position-sensing detectors (4-1 to 4-6) and said light-emitting means (2-1 to 2-6) so that said supporting part and thus said slotted apertures (3-1 to 3-6) mounted thereon is always returned to its starting position.

13. The means as set forth in any of the claims 8, 9 or 11, **characterized in that** said at least six light-emitting means (2-1 to 2-6) are accommodated in a supporting means (6) to which a cylindrical ring (3) is fixedly connected, in which said slotted apertures (3-1 to 3-6) are provided equispaced angularly the same as said light-emitting means (2-1 to 2-6) mounted by said supporting means (6) and each offset by 90° to each other radially as regards their main direction of extension.

14. Application of a means as set forth in any of the claims 1 to 13 wherein said means (10, 10') is attached to the end of a robotic arm between the latter and, for example, a manipulator.

15. Application of a means as set forth in any of the claims 1 to 13 wherein an array of at least three or four of said means (10, 10') is arranged below a platform mounting a robotic device, a machine tool, a crane or a machine correspondingly devised in function and design.

16. Application of a means as set forth in any of the claims 1 to flange 13 in automotive final assembly wherein at least one of said means (10, 10') is provided in or on each chassis locator on which frames are positioned to which further frame and/or body parts of a vehicle are to be secured by means of welding guns.

17. Application of a means as set forth in any of the claims 1 to 13 wherein an array of means (10, 10') is arranged below a threshold plate of a security area.

## Revendications

1. Dispositif pour détecter des mouvements relatifs d'un objet comportant une bride d'entrée (12) qui peut être fixée sur l'objet, une bride (13) reliée de manière rigide à une plaque de base (11) et une pièce intermédiaire (14), approximativement en forme annulaire et réalisée soit d'une seule pièce soit en plusieurs parties à partir d'éléments agencés les uns à côté des autres, laquelle est agencée entre les deux brides (12, 13) et reliée à celles-ci sans possibilité de rotation et sans possibilité de déplacement et constituée par un élastomère ou une résine coulée et dans la région intérieure de laquelle est prévue une unité de détection de force (15) pour détecter le mouvement relatif des deux brides (12, 13) l'une par rapport à l'autre, **caractérisé en ce que** l'unité de détection de force (15) contient un dispositif de fixation (6) stationnaire et un capuchon (150) monté de façon mobile par rapport à ce dispositif de fixation (6), ainsi qu'un capteur de moments et de forces (1) qui détecte les trois mouvements de translation possibles et les trois mouvements de rotation possibles du capuchon (150) par rapport au dispositif de fixation (6), et **en ce que** l'unité de détection (15) est fixée avec son capuchon (150) au milieu de la bride d'entrée (12) et avec son dispositif de fixation (6) sur l'autre bride (13) de telle sorte qu'elle ne touche pas la pièce intermédiaire (14) ou qu'elle est fixée de manière différente avec son capuchon (150) sur une pièce de liaison (19) prévue dans la région médiane de la partie intermédiaire réalisée approximativement en forme annulaire et faisant saillie à l'intérieur de celle-ci et, avec son dispositif de fixation (6), elle est fixée sur l'autre bride (13) de sorte que des mouvements relatifs de translation et de rotation entre la bride d'entrée (12) et la bride (13) fixée sur la plaque de base (11) au-dessus de la pièce intermédiaire sont transmis à l'unité de détection (15) et au capteur de couple et de force (1) contenu dans celle-ci.

2. Dispositif selon la revendication 1, **caractérisé en ce que** la pièce intermédiaire (14) en plusieurs parties est formée par des tronçons annulaires avec une section transversale approximativement rectangulaire.

3. Dispositif selon la revendication 1, **caractérisé en ce que** la pièce intermédiaire (14) en plusieurs parties est formée par des éléments parallélépipédiques agencés approximativement en forme de cercle.

4. Dispositif selon la revendication 1, **caractérisé en ce que** la pièce intermédiaire (14) en plusieurs parties est formée par des éléments cylindriques agencés approximativement en forme de cercle avec une section transversale carrée, rectangulaire, polygonale et/ou circulaire.

5. Dispositif selon l'une des revendications précédentes, **caractérisé en ce que** la pièce intermédiaire (14) en une partie réalisée en forme annulaire ou la pièce intermédiaire (14) réalisée approximativement en forme annulaire à partir d'éléments identiques et/ou différents contient des traverses et/ou des entretoises de mêmes dimensions et/ou de dimensions différentes, agencées à la manière d'un treillis.

6. Dispositif selon l'une des revendications précédentes, **caractérisé en ce que** les éléments d'une pièce intermédiaire en plusieurs parties sont des corps creux avec structure en croix et/ou en grille.

7. Dispositif selon l'une des revendications précédentes, **caractérisé en ce que** l'élastomère ou la résine coulée est du polyuréthanne duroplastique.

8. Dispositif selon la revendication 1, **caractérisé en ce qu'**à l'intérieur de l'unité de détection (15), il est prévu à titre de capteur de moments et de forces (1) un agencement opto-électronique pour détecter simultanément six composantes (X, Y, Z ; A, B, C) dans ou autour des trois axes (X, Y, Z) d'un système de coordonnées orthogonales, et chacun d'au moins six dispositifs électroluminescents (2-1 à 2-6) montés dans un plan à des distances angulaires égales les uns des autres, avec chacun un diaphragme à fente (3-1 à 3-6) monté en amont et fixement associé par rapport à un détecteur sensitif à la position (4-1 à 4-6) et orienté avec son axe de détecteur perpendiculairement à la direction de fente du diaphragme à fente respectivement associé (3-1 à 3-6) est prévu de telle sorte que soit les dispositifs électroluminescents (2-1 à 2-6) avec diaphragmes à fente associés (3-1 à 3-6) et les détecteurs sensitifs à la position (4-1 à 4-6) peuvent être déplacés de manière relative les uns par rapport aux autres soit les diaphragmes à fente (3-1 à 3-6) et les dispositifs électroluminescents (2-1 à 2-6) ainsi que les détecteurs sensitifs à la position (4-1 à 4-6) peuvent être déplacés les uns par rapport aux autres.

9. Dispositif selon la revendication 8, **caractérisé en ce que** six dispositifs électroluminescents (2-1 à 2-6) sont prévus stationnaires avec chacun un diaphragme à fente (3-1 à 3-6) monté en amont à distance fixe, **en ce que** des diaphragmes à fente voisins sont réalisés chacun en décalage de 90° du point de vue de leur direction d'extension principale, et **en ce qu'**il est prévu six détecteurs (4-1 à 4-6) sensitifs à la position et mobiles par rapport aux diaphragmes à fente (3-1 à 3-6), dont l'axe de détecteur respectif est orienté perpendiculairement à la direction de fente du diaphragme à fente respectif associé (3-1 à 3-6).

10. Dispositif selon la revendication 8, **caractérisé en ce que** les six dispositifs électroluminescents (2-1 à 2-6) et les détecteurs (4-1 à 4-6) sensitifs à la position orientés de manière correspondante par rapport à ceux-ci sont prévus stationnaires, et les diaphragmes à fente (3-1 à 3-6) agencés à distance fixe des dispositifs électroluminescents respectifs (2-1 à 2-6) sont agencés mobiles en commun par rapport aux détecteurs sensitifs à la position (4-1 à 4-6), des diaphragmes à fente (3-1 à 3-6) voisins étant réalisés en décalage respectif de 90° par rapport à leur direction d'extension principale.

11. Dispositif selon la revendication 8 ou 9, **caractérisé en ce que** les détecteurs sensitifs à la position (4-1 à 4-6) sont agencés avec orientation correspondante sur la face intérieure d'un anneau cylindrique (5) qui est monté de manière solidaire sur la face intérieure d'un capuchon (8) de l'unité de détection (15) et qui est déplaçable via des éléments à ressort (7) prévus entre l'anneau (5) et un dispositif de fixation (6) portant au milieu les dispositifs électroluminescents (2-1 à 2-6) par rapport à l'agencement stationnaire constitué par au moins les six dispositifs électroluminescents (2-1 à 2-6) et lesdits au moins six diaphragmes à fente (3-1 à 3-6) associés respectivement à ceux-ci, de telle sorte que l'anneau (5) revient toujours dans sa position de départ.

12. Dispositif selon la revendication 8 ou 10, **caractérisé en ce que** les détecteurs sensitifs à la position (4-1 à 4-6) sont agencés de manière fixe par rapport à l'agencement stationnaire constitué par les dispositifs électroluminescents (2-1 à 2-6) et orientés de manière correspondante, et les diaphragmes à fente (3-1 à 3-6), qui sont agencés en commun sur une pièce porteuse reliée avec la face intérieure de la surface de capuchon (151) bombée du dispositif de détection (15), sont déplaçables, via des éléments à ressort (7) prévus entre la partie porteuse et l'agencement stationnaire constitué par les détecteurs sensitifs à la position (4-1 à 4-6) et les dispositifs électroluminescents (2-1 à 2-6), de telle sorte que la partie porteuse et par conséquent les diaphragmes à fente (3-1 à 3-6) agencés sur celle-ci reviennent toujours dans leur position de départ.

13. Dispositif selon l'une des revendications 8, 9 ou 11, **caractérisé en ce que** lesdits au moins six dispositifs électroluminescents (2-1 à 2-6) sont logés dans un dispositif de fixation (6) auquel un anneau (3) cylindrique est relié de manière solidaire, dans lequel sont prévus des diaphragmes à fente (3-1 à 3-6) respectifs décalés de 90° les uns par rapport aux autres suivant les mêmes distances angulaires que les dispositifs électroluminescents (2-1 à 2-6) montés sur le dispositif de fixation (6), et en alternance et à l'opposé de ceux-ci en direction radiale, du point de vue de leur direction d'extension principale.

14. Utilisation d'un dispositif selon l'une des revendications 1 à 13, dans laquelle le dispositif (10, 10') est monté à l'extrémité d'un bras de robot entre celui-ci et par exemple un dispositif de retenue ou de saisie.

15. Utilisation de dispositifs selon l'une des revendications 1 à 13, dans laquelle un nombre d'au moins trois ou quatre des dispositifs (10, 10') sont agencés sous une plate-forme sur laquelle est monté un robot, une machine-outil, une grue ou une machine conçue de manière correspondante du point de vue de sa fonction et de sa réalisation.

16. Utilisation de dispositifs selon l'une des revendications 1 à 13 dans le montage terminal de véhicules automobiles, dans laquelle au moins un des dispositifs (10, 10') est prévu dans ou sur chacun des mandrins de cages sur lesquels sont positionnés des cadres auxquels d'autres parties de cadre et/ou de carrosserie d'un véhicule sont fixées par des pinces de soudage.

17. Utilisation de dispositifs selon l'une des revendications 1 à 13, dans laquelle un certain nombre de dispositifs (10, 10') sont agencés sous une plaque d'accès agencée devant l'entrée à une zone de sécurité.
